(19) Europäisches Patentamt

European Patent Office

Office européen des brevets

(11) **EP 0 878 357 B1**

(12) **EUROPEAN PATENT SPECIFICATION**

(45) Date of publication and mention
of the grant of the patent:
**21.07.2004 Bulletin 2004/30**

(51) Int Cl.$^7$: **B60R 21/04**

(21) Application number: **98108646.5**

(22) Date of filing: **12.05.1998**

(54) **Energy absorbing structure**

Energieabsorbierendes Bauelement

Structure absorbante d'énergie

(84) Designated Contracting States:
**DE FR GB IT**

(30) Priority: **12.05.1997 JP 13753297**
**12.05.1997 JP 13753397**

(43) Date of publication of application:
**18.11.1998 Bulletin 1998/47**

(73) Proprietor: **INOAC CORPORATION**
**Nagoya-shi Aichi-ken (JP)**

(72) Inventor: **Teshima, Kohya**
**Fujii-cho, Anjo-shi Aichi (JP)**

(74) Representative: **Füchsle, Klaus, Dipl.-Ing. et al**
**Hoffmann Eitle,**
**Patent- und Rechtsanwälte,**
**Arabellastrasse 4**
**81925 München (DE)**

(56) References cited:
**EP-A- 0 676 315**      **EP-A- 0 736 422**
**EP-A- 0 753 432**      **DE-A- 19 505 935**
**GB-A- 2 293 798**      **GB-A- 2 304 648**

- **"IMPROVING HEAD-IMPACT PROTECTION"**
**AUTOMOTIVE ENGINEERING,US,SOCIETY OF**
**AUTOMOTIVE ENGINEERS. WARRENDALE, vol.**
**104, no. 5, page 49-53 XP000591331 ISSN:**
**0098-2571**

Remarks:
The file contains technical information submitted
after the application was filed and not included in this
specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

1. Field of the Invention

The present invention relates to an energy absorbing structure which is incorporated in a pillar garnish such as a front pillar, a center pillar, or the like, of a car so that impact energy can be absorbed effectively. Such an energy absorbing structure is known from DE 195 05 935 A that forms the closest prior art according to the preamble of the independent claims.

2. Description of the Related Art

In recent years, protection of a crew at the time of vehicle collision has been eagerly discussed. An attempt to prevent the head of a crew from colliding with the interior of a car at the time of vehicle collision to thereby reduce the value of injury to protect the tissue injury of the head will start in accordance with FMVSS201 (Federal Motor Vehicle Safety Standards) which will be carried out from September, 1998.

At the time of vehicle collision, the head of a crew may collide with a pillar garnish which is an interior of a car. Accordingly, discussion has started so that an energy absorbing material is disposed in the back surface (body inner side) of the pillar garnish to reduce the injury value. Particularly, as the energy absorbing material, lattice-like resin ribs have been mainly discussed because of the attaching characteristic and producing characteristic thereof.

Incidentally, the FMVSS201 is the currently most effective means for measuring the injury value of the crew head at the time of vehicle collision. In the testing method, a dummy (weight: 4.54 kg) of the crew head is made to collide with a collision position defined in the F MVSS201 at a horizontal angle in a range of from 105° to 165° and a vertical angle in a range of from 5° to 50° at a velocity not lower than 24 km/h (equivalent to a vehicle collision velocity of 5024 km/h). The injury value is expressed as Hic(d) (Head injury criteria, d: dummy). According to the FMVSS201, it is said that Hic(d)>1000 may cause the tissue injury of the crew head. Here, Hic(d) is given by the following expression.

$$Hic(d) = 0.75446 \left\{ \frac{1}{(t_2 - t_1)} \int_{t_1}^{t_2} g \, dt \right\}^{2.5} (t_2 - t_1) + 166.4$$

$$\ldots \ldots (1)$$

Upon such circumstances, it is expected from the FMVSS201 that the injury value related to the pillar garnish will become highest in the direction of impact in which the energy absorbing stroke (the distance from the body to the FMH (Free Motion Headform) at the time of collision with the pillar garnish) is shortest.

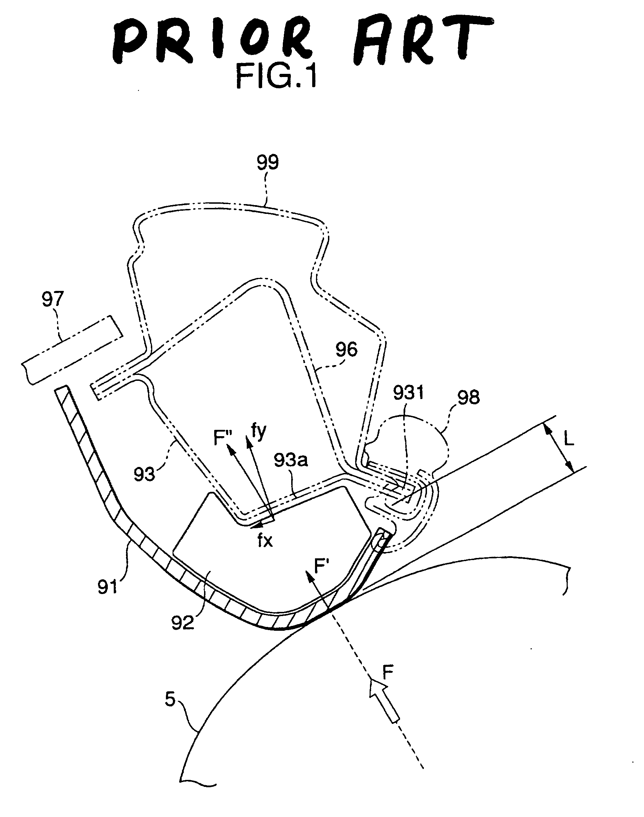

However, the conventional pillar garnish has a problem when discussed on the basis of the FMVSS201. That is, the conventional pillar garnish 91 took an energy absorbing stroke L as shown in Fig. 1 so that the shape of the body inner swelled toward the room side. When impact force F is applied in the direction of impact in which the energy absorbing stroke L becomes shortest, force fx acting on the front window 97 side is generated in the receiving surface 93a of the body inner 93 which receives the energy absorbing material 92. Accordingly, the energy absorbing material 92 slid toward the front window 97 side without sufficient use of the energy absorbing stroke L. As a result, the crew head struck against the body flange 931 at the time of collision, so that Hic(d) increased.

The content of the above description will be described in detail with reference to Fig. 1. When the dummy 5 (FMH: Free Motion Headform) of the crew head is made to collide on the basis of the testing method of the FMVSS201, the impact force F of the FMH acts on the direction of impact and acts as force F' in the direction of the normal line with respect to the contact surface of the pillar garnish. The force F' acting on the pilar garnish 91 is transmitted to the energy absorbing material 92 (for example, lattice-like resin ribs) so as to act as force F'' acting on the body-inner receiving surface 93a. The force F'' is decomposed into a component fy in the direction of the normal direction with respect to the body inner surface and a component fx in the direction of the surface. These components fy and fx are related to the behavior of the energy absorbing material 92.

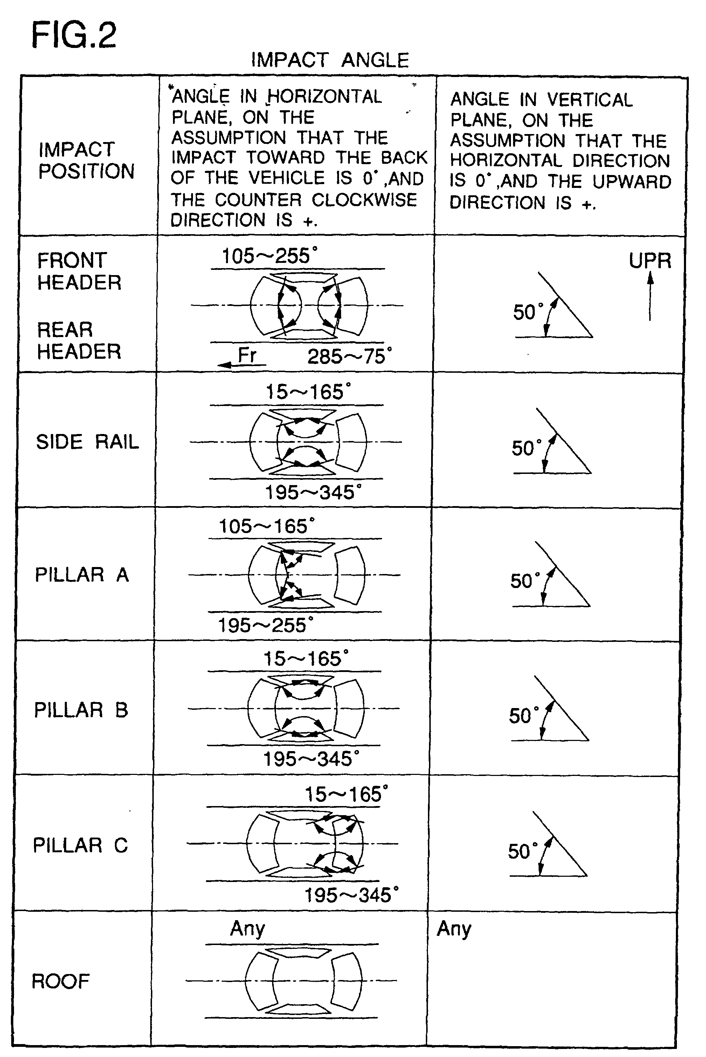

Further, because the component fx acted on the vehicle inside, the energy absorbing material 92 slid toward the vehicle inside. As a result, the energy absorbing stroke L could not be utilized sufficiently, so that high impact force was given to the crew head. Thus, according to a collision test, however, the energy absorbing material (mainly, lattice-like resin ribs) disposed simply in the rear surface of the pillar garnish, slid toward the front window side so that the energy absorbing material could not fulfill energy absorption sufficiently. This was because the collision testing method was ranged widely (Fig. 2) so that the energy absorbing material had a tendency to slide correspondingly to the direction of collision.

On the other hand, an energy absorbing material exhibiting an effect of energy absorption in a wide range has been discussed as in a technique disclosed in Japanese Patent Unexamined Publication No. Hei 9-24785. This prior art had a problem that the visibility and getting-on-and-off characteristic of the crew, and the designing characteristic are worsened because the pillar garnish is larger than the pillar portion.

A further prior art that is of interest is DE 195 05 935 A that is concerned with an energy absorbing structure which is incorporated in a vehicle pillar, the energy absorbing structure being a non-metallic material. This material is incorporated in an inner space between a body inner and an outer body portion of the vehicle. To prevent sliding of the energy absorbing material with respect to the body inner as a result of an impact of a head of a person in said vehicle against the vehicle pillar, the energy absorbing material is fixed to the body inner by means of screws, brackets or the like. The present invention avoids the need for such means for securing the energy absorbing material in position.


SUMMARY OF THE INVENTION


The present invention is as defined in the accompanying claims, the independent claims of which have been divided into a two-part form based on the assumption that the aforesaid DE 195 05 935 A is the nearest state of the art.

The present invention is designed to solve the aforementioned problems and an object thereof is to provide an energy absorbing structure that can utilize the energy absorbing stroke sufficiently upon use of the direction of impact which is defined by the FMVSS201 so that the distance from a body inner to a dummy head touching a pillar garnish becomes shortest.

Another object of the present invention is to provide an energy absorbing structure in which widening of a pillar portion is suppressed to secure the width of an opening in the vicinity of the pillar portion to thereby effectively absorb impact energy at the time of vehicle collision to attain protection of a crew while attaining good getting-on-and-off of a crew and good visibility and appearance of the vehicle.

To achieve the foregoing objects, according to a first aspect of the invention, there is provided an energy absorbing structure of a vehicle comprising: an energy absorbing matter disposed between a body inner and a pillar garnish; the energy absorbing matter having a concave portion corresponding to a peak of a vehicle inner convex portion of said body inner; and wherein the pillar garnish has an inflection point. An impact point defined by FMVSS201 (Federal Motor Vehicle Safety Standard) is located further inside the vehicle than said inflection point related to said pillar garnish and with respect to an impact direction defined in FMVSS201. The aforesaid peak of said vehicle inner convex portion of said body inner is located in said vehicle further towards the vehicle outside than is the center position of gravity of a dummy head advancing in said impact direction. The structure has an energy absorbing stroke distance that is the shortest distance between the pillar body and the pillar garnish as defined by a distance between a first line that is tangential to the pillar garnish at its said inflection point and a second line that is parallel to said first line and touching that part of said body inner that is closest to said first fixed line when measured along a direction that is parallel to said impact direction. The aforesaid features and parameters serve, when the dummy head impacts against the pillar garnish, to cause the energy absorbing matter to exert a force on the body inner, said force having a component directed to the vehicle outside that prevents the energy absorbing matter from moving away from the body inner.

When the impact point is located in a vehicle further inside than the inflection point related to the pillar garnish, and the absorbing matter concave portion corresponding to the peak of the vehicle inside convex portion of the body inner is located in a vehicle further outside than the centre position of gravity of the head advancing in the direction of impact as defined in the first aspect of the invention, the force fx acting on the receiving surface of the body inner which receives the energy absorbing material is directed to the vehicle outside. Accordingly, the energy absorbing matter is prevented from sliding, so that the energy-absorbing stroke can be utilized sufficiently.

According to a second aspect of the present invention, there is provided an energy absorbing structure of a vehicle comprising:

an energy absorbing matter disposed between a pillar garnish and an inner member provided in the vehicle interior side of a pillar; and wherein the pillar garnish is spaced from said inner member by a distance not smaller than 15mm;

wherein one receiving surface of said inner member is kept within an angle range θ of 105° clockwise from a base line using the rearwardly extending longitudinal direction of the vehicle as being 0°;

that said distance that is not smaller than 15mm is one determined by drawing a first line through a contact point at which a dummy head touches the pillar garnish on impact, said first line being at an angle $\alpha$ of 15° clockwise with respect to the aforesaid base line; drawing a second line passing through said impact point and normal to said first line; drawing a third line parallel to said second line and touching that point of said inner member that is closest to said second line; and in which it is the distance between said parallel lines that is. not less than 15mm;

and in that said aforesaid features and parameters serve, when the dummy head impacts against the pillar garnish, to cause the energy absorbing matter to exert a force on the body inner, said force having a component directed to the vehicle outside that prevents the energy absorbing matter from moving away from the body inner. Here, the "angle range of 105° clockwise from a base line using the backward direction of a vehicle as 0" does not contain 0°.

According to a further aspect of the present invention there is provided an energy absorbing structure of a vehicle comprising:

an energy absorbing matter disposed between a pillar garnish and an inner member provided in the vehicle interior side of a pillar; and wherein the pillar garnish is spaced from said inner member by a distance not smaller than 15mm; and wherein

one receiving surface of said inner member is kept within an angle range of 75° to 180° in the case of a centre pillar and in the case of a rear pillar clockwise from a base line using the rearwardly extending direction of the vehicle as being 0°;

that said distance that is not smaller than 15mm is one determined by drawing a first line through a contact point at which a dummy head touches the pillar garnish on impact, said first line being at an angle $\alpha$ of 15° clockwise with respect to the aforesaid base line; drawing a second line passing through said impact point and normal to said first line; drawing a third line parallel to said second line and touching that point of said inner member that is closest to said second line; and in which it is the distance between said parallel lines that is not less than 15mm; and that said aforesaid features and parameters serve, when the dummy head impacts against the pillar garnish, to cause the energy absorbing matter to exert a force on the body inner, said force having a component directed to the vehicle outside that prevents the energy absorbing matter from moving away from the body inner.

When the receiving surface is within a angle range of 105° clockwise from a base line using the backward direction of a vehicle as 0° on the basis of the direction of the movement of the vehicle as in the invention stated in Claim 3, the component of force turning toward the vehicle inside is eliminated so that the energy absorbing matter can be utilized effectively.

Further, when the distance between the pillar and a contact point at which a head dummy touches the pillar garnish in the direction of an angle of 15° clockwise from the base line using the backward direction of the vehicle as 0° is kept so as not to be smaller than 15 mm, the injury value Hic(d) (Head injury criteria, d: dummy) becomes smaller than 1000 even in the direction of impact in which the injury value is highest. Accordingly, the tissue injury of the crew head can be avoided.

BRIEF DESCRIPTION OF THE DRAWINGS

Fig. 1 is a cross-sectional view of an energy absorbing matter disposed in a space surrounded by a body inner frame and a pillar garnish in the prior art;
Fig. 2 is a view for explaining an impact angle based on a testing method of FMVSS201;
Fig. 3 is a cross-sectional view of an energy absorbing matter disposed in a space surrounded by a body inner frame and a pillar garnish according to one embodiment of the present invention;
Fig. 4 is a perspective view of the inside of a car room in the vicinity of the pillar garnish;
Fig. 5 is a perspective view of the pillar garnish;
Fig. 6 is a graph showing the relationship between the quantity of deformation and the generated load;
Fig. 7 is a graph showing the relationship between the quantity of deformation and the generated load in the conventional structure;

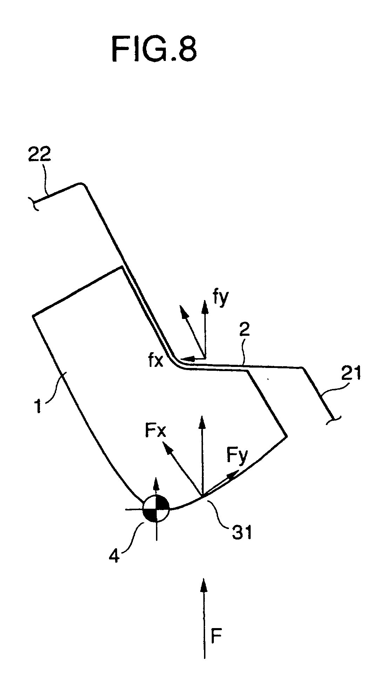

Fig. 8 is a cross-sectional view for explaining the prior art;
Fig. 9 is a cross-sectional view of an energy absorbing matter disposed in a space surrounded by an inner member and a pillar garnish according to another embodiment of the present invention;
Fig. 10 is an enlarged view showing a main part of Fig. 9;
Fig. 11 is a perspective view of the inside of a car room in the vicinity of the pillar garnish;
Fig. 12 is a perspective view of the pillar garnish;
Fig. 13 is a cross-sectional view of another carrying-out mode than the energy absorbing structure of Fig. 10; and
Fig. 14 is a graph showing the relationship between load and energy absorbing stroke.

## DETAILED DESCRIPTION OF THE PREFERRED EMBODIMENTS

Now, a description will be given in more detail of preferred embodiments of the present invention with reference to the accompanying drawings.

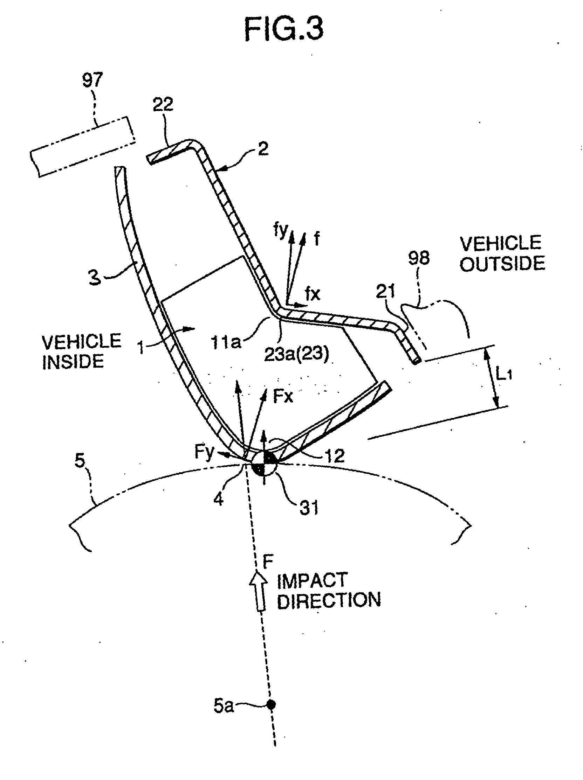

Figs. 3 to 6 show an energy absorbing matter according to one aspect of the present invention. In these drawings, this carrying-out mode is applied to a front pillar.

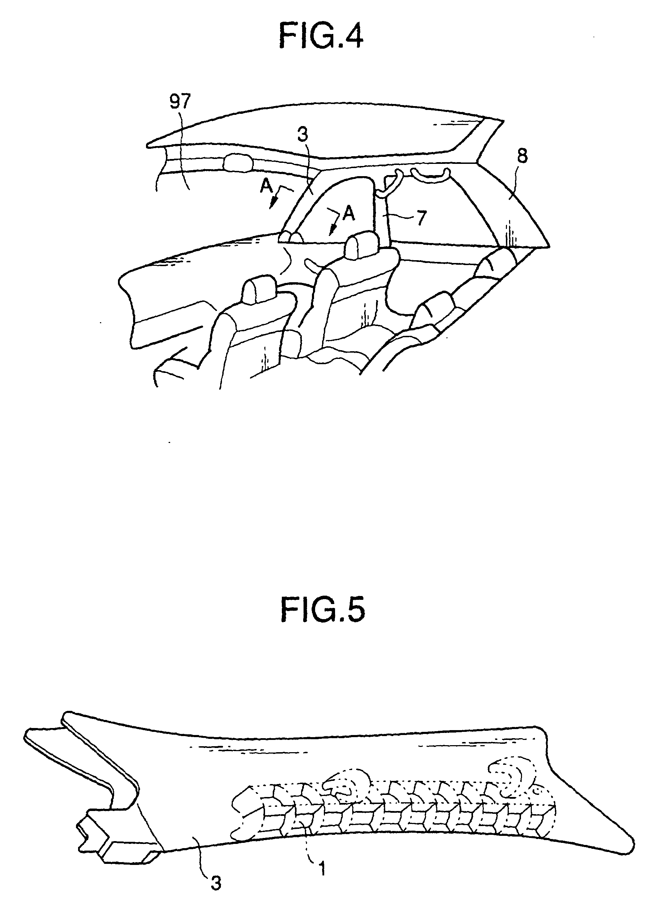

In the energy absorbing structure according to the present invention, as shown in Fig. 3, an energy absorbing matter 1 is disposed between a body inner 2 and a pillar garnish 3. Although Fig. 3 is a sectional view taken along the arrow A-A in Fig. 4, Fig. 3 shows only a main part simply for the purpose of avoiding complication. Other constituent parts omitted in Fig. 3, for example, body outer 96, opening trim 98, body shell 99, etc., correspond to those in Fig. 1.

The energy absorbing matter 1 is formed of an absorbing material having surfaces substantially along the vehicle inside surface of the body inner and the rear surface of the pillar garnish. The body inner 2 has body flanges 21 and 22 in opposite sides, and a convex portion 23 which is formed so as to project toward the vehicle inside on the way from an opening trim 98 to a front window 97 as shown in Fig. 3. Further, a concave portion 11a of the absorbing matter is formed correspondingly to a peak 23a of the convex portion.

Further, the pillar garnish 3 is substantially L-shaped in sectional view and has an inflection point 31 whereas the energy absorbing matter 1 is also substantially L-shaped in section on the pillar garnish side and has an inflection point 12 corresponding to the inflection point 31.

Although this embodiment shows the case where lattice-like resin ribs are employed in the energy absorbing matter 1 (Fig. 5), it is a matter of course that another energy absorbing matter such as form, metal, etc., may be used.

Further, the inflection point 31 is configured so as to be located in the vehicle outside outer than the impact point 4 defined by FMVSS201.

Here, FMVSS in FMVSS201 is an abbreviation of Federal Motor Vehicle Safety Standards which will be carried out from September, 1998. The impact point 4 is defined uniquely by the provision of FMVSS201.

Further, the direction of impact shakes through the impact point 4 defined by FMVSS201. With respect to the direction of impact which is defined by FMVSS201 so that the distance L1 from the body inner 2 to the dummy head 5 touching the pillar garnish 3 becomes shortest, the absorbing matter concave portion 11a corresponding to the peak 23a of the vehicle inner convex portion 23 of the body inner 2 is located in a vehicle outside outer than the position of the center 5a of gravity of the head advancing in the direction of impact. Incidentally, in this embodiment, the distance L1 from the body inner 2 to the dummy head 5 touching the pillar garnish 3 means the distance from an end of the body flange 21 to the dummy head 5.

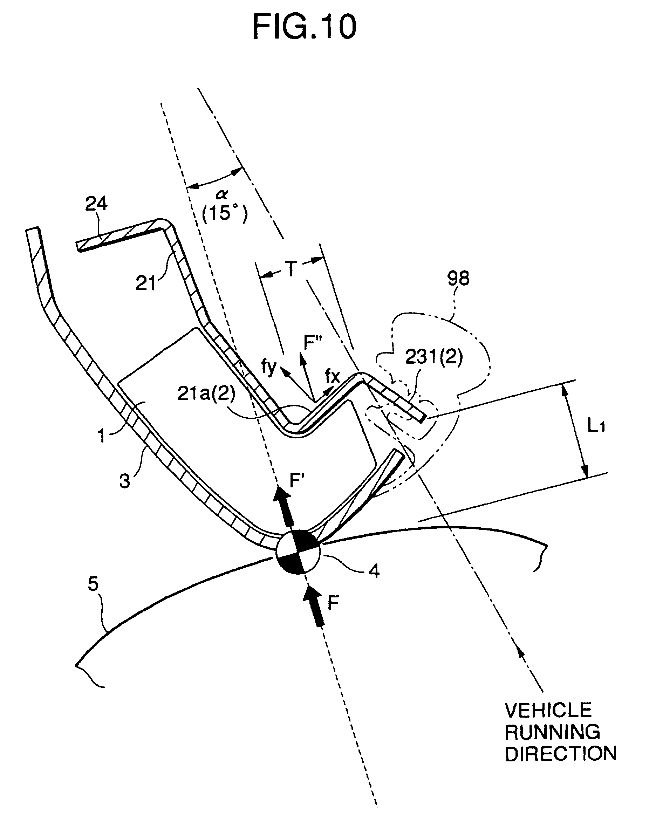

In the aforementioned energy absorbing structure, when the FMH 5 (Free Motion Headform) is subjected to collision on the basis of the testing method of FMVSS201, the impact force F of the FMH 5 acts on the impact direction and is transmitted as force Fx to the direction of the normal line at the impact point 4. The force Fx is further transmitted to the energy absorbing matter 1 to form force $\underline{f}$ acting on the receiving surface of the body inner 2. The force $\underline{f}$ is decomposed into components fx and fy on the surface of the body inner. The component fx becomes force for pressing the energy absorbing matter 1 against the body inner. In the conventional case where the impact point 4 was located in the outside outer than the inflection point 31, for example, in Fig. 10, the component fx acted to disconnect the energy absorbing matter 1 from the body inner 2 so that the energy absorbing matter 1 slid and escaped to the vehicle inside. This disadvantage is eliminated.

Thus, the component fy acts effectively so that the energy absorbing matter 1 collapses and buckles to make it possible to absorb the impact energy.

Next, the performance of the energy absorbing structure according to the present invention has been examined. Results of the test will be described below.

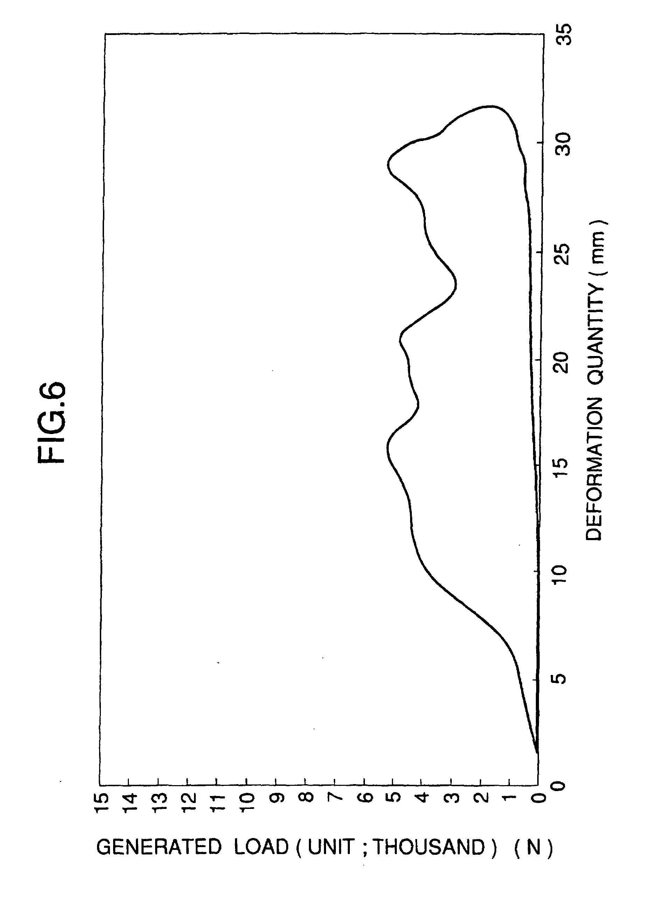

An impact test was applied to the energy absorbing structure in Fig. 3, so that the velocity (calculation) of 24km/h, the maximum displacement of 31.6mm, the maximum acceleration of 117.1G, the maximum load of 5.21kN, the Hic of 534.7 and the Hic(d) of 569.5 were obtained. The value of Hic(d) (Head injury criteria, d: dummy) is greatly lower than 1000. Further, Fig. 6 of the relationship between the deformation quantity and the generated load was obtained. The graph shows that the initial load rises initially so that energy absorption is made effectively without sliding of the energy absorbing matter 1.

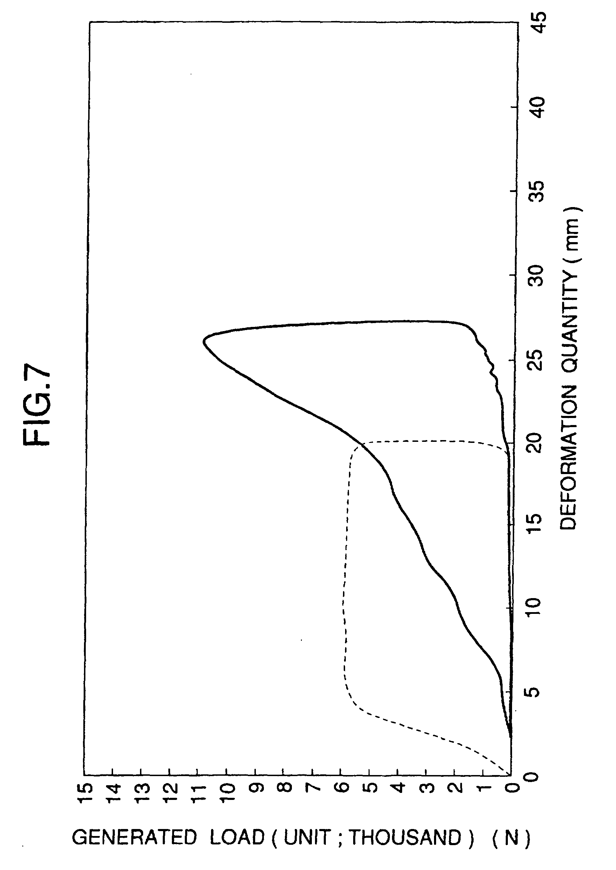

On the contrary, in the conventional structure in Fig. 1, the velocity (calculation) of 24.27km/h, the maximum displacement of 27.5mm, the maximum acceleration of 245.2G, the maximum load of 10.92kN, the Hic of 1411.0 and the Hic(d) of 1230.3 were obtained. That is, the value of Hic(d) became high. Further, from Fig. 7 of the relationship between the deformation quantity and the generated load, though it was ideal that the generated load was suppressed to a lower value in spite of the increase of the deformation quantity as represented by the broken line, the energy absorbing matter 1 slid so that the initial load became a low value of 3.0 kN at the time of deformation of 10mm while the maximum load became a high value of 10.92 kN at the time of deformation of 24.5mm.

In the energy absorbing structure configured as described above, it is apparent from the performance test that the energy absorbing matter 1 is utilized wastelessly. Accordingly, the injury value Hic(d) of the crew head at the time of vehicle collision can be reduced. When the impact direction defined by FMVSS201 so that the distance L1 from the body inner 2 to the dummy head 5 touching the pillar garnish 3 is shortest is applied, the energy absorbing stroke is utilized sufficiently.

Further, because the energy absorbing matter 1 can be utilized wastelessly, the energy absorbing stroke can be shortened. The energy absorbing stroke which was required to be not smaller than 20mm conventionally, can be set to be about 15mm.

On the other hand, because the energy absorbing stroke can be shortened, a space can be secured in the inside of the car room, security of visibility and getting-on-and-off characteristic for the crew can be improved.

Incidentally, the present invention is not limited to such an energy absorbing structure as described in the above embodiment and various changes can be made correspondingly to the purpose and use within the scope of the invention. The shapes, sizes, materials, etc. of the body inner 2, pillar garnish 3 and the energy absorbing matter 1 can be selected suitably correspondingly to the purpose of use. The pillar garnish 3 may be applied to any pillars other than the front pillar, for example, the center pillar 7, the rear pillar, etc.

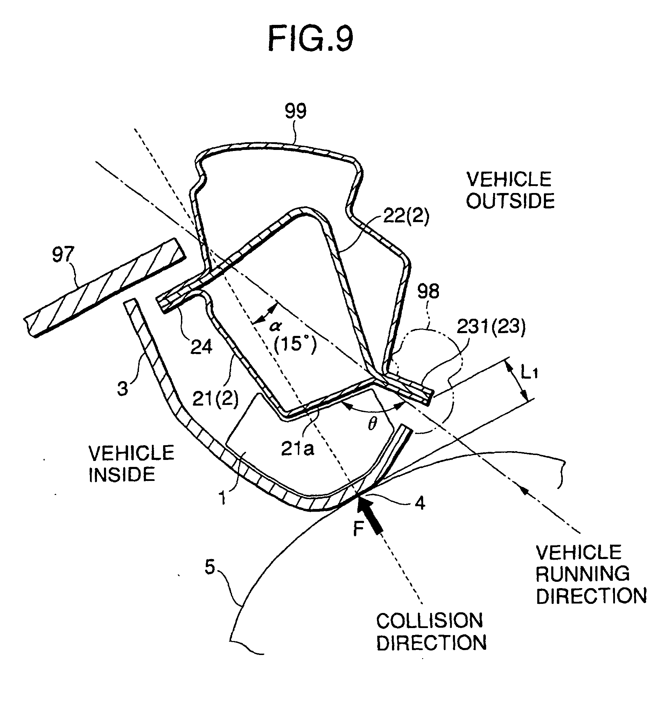

Figs. 9 to 14 show an energy absorbing matter according to another aspect of the present invention. In these drawings, this embodiment is applied to a front pillar.

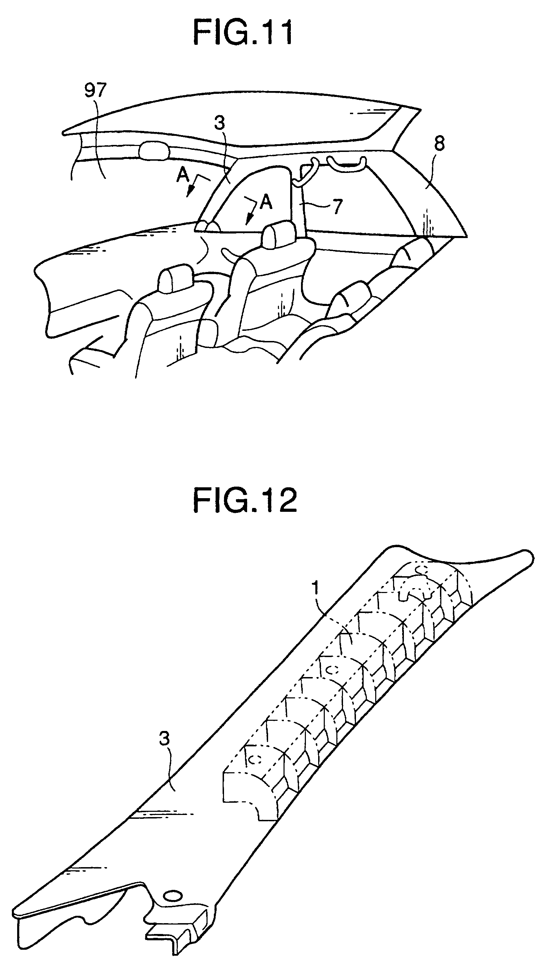

In the energy absorbing structure according to the present invention, as shown in Fig. 9, an energy absorbing matter 1 is disposed between a pillar garnish 3 and an inner member 21 provided in the vehicle interior side of a pillar 2. Although Figs. 9 and 10 are sectional views taken along the arrow A-A in Fig. 11, Fig. 10 shows only a main part simply for the purpose of avoiding complication.

The pillar 2 includes an inner member 21, and an outer member 22. In the pillar 2, the inner and outer members 21 and 22 are connected to each other by flange portions 23 and 24 in opposite sides of the inner and outer members 21 and 22. As shown in Fig. 11, the inner member 21 is substantially L-shaped in cross section and the angle θ of one receiving surface 21a of the inner member 21 is within a range of 105° (in Fig. 11, just 105°) clockwise from a base line using the backward direction of a vehicle as 0° on the basis of the direction of the movement of the vehicle. The angle θ of the receiving surface is preferably in a range of from 30° to 105°, further preferably in a range of from 60° to 105°. When the angle θ is in this range, efficiency in molding of the inner member 21 is enhanced more greatly.

On the other hand, the pillar garnish 3 is disposed at a predetermined distance from the inner member 21 and roundly L-shaped in cross section.

The energy absorbing matter 1 has a solid shape, which has, as its bottom surface, a surface along the inner member 21 and, as its front surface, a surface along the rear surface of the pillar garish 3. Although the energy absorbing matter 1 is disposed in the vicinity of the inner member 21, the energy absorbing matter 1 may be disposed so as to touch the inner member 21. Although this embodiment of the invention employs lattice-like resin ribs in the energy absorbing matter 1 (Fig. 12), it is a matter of course that a foaming agent such as urethane block or a metal, or the like, may be employed in an energy absorbing matter.

Incidentally, in the respective drawings, hatching for section with respect to the energy absorbing matter 1 is omitted for elimination of complication. The reference numeral 97 designates a front window; 98, an opening trim; and 99, a body shell.

In the energy absorbing structure according to the present invention, further, the distance L1 between the pillar 2 and a contact point 4 (impact point), at which a head dummy 5 in the direction of an angle 15° clockwise from the base line using the backward direction of the vehicle as 0° touches the pillar garnish 3, is kept so as not to be smaller than 15 mm.

As a method for evaluating the injury value of a crew head at the time of vehicle collision, there is FMVSS201. The impact direction in which the injury value based on this testing method becomes highest is a direction in which the distance (L in Fig. 1) between the head dummy 5 (FMH: Free Motion Headform) of a crew touching the pillar garnish 3 and the inner member 21 becomes shortest. This is the direction of an angle 15° clockwise from the base line using the backward direction of the vehicle as 0°.

The reason why the distance between the pillar 2 and the contact point 4 at which the head dummy 5 touches the pillar garnish 3 needs to be kept not smaller than 15 mm is in that an energy absorbing stroke (specifically, the distance L1 between the pillar 2 and the contact point 4) needs to be not smaller than 15 mm in order to satisfy the injury value defined by FMVSS201 because the impact energy of the FMH 5 is given as $E = (1/2) \times 4.54\text{kg} \times (24\text{km/h})^2 = 102\text{J}$ by $E = (1/2)mv^2$. The injury value defined by the FMVSS201 is given by the following expression (2).

$$0.75446 \left\{ \frac{1}{(t_2 - t_1)} \int_{t_1}^{t_2} g dt \right\}^{2.5} (t_2 - t_1) + 166.4 < 1000$$

.

$$\dots \dots (2)$$

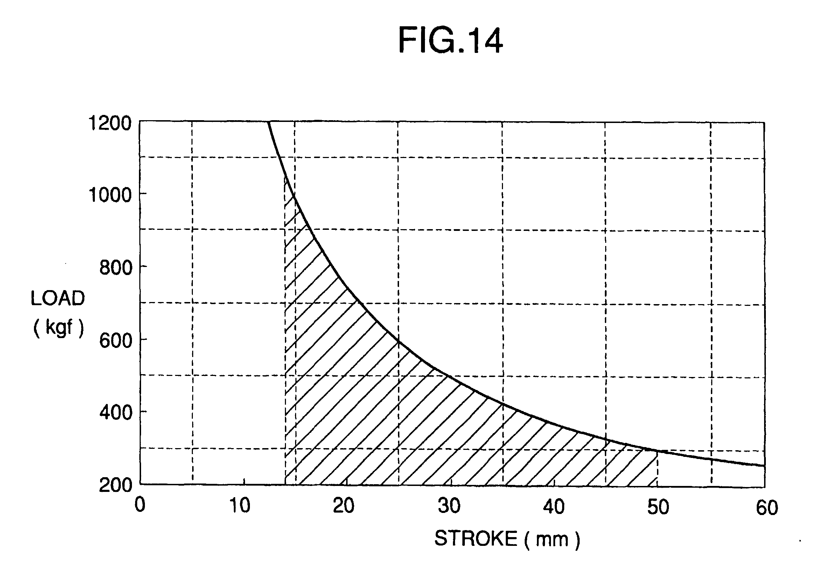

The relationship between load and energy absorbing stroke is shown in Fig. 14. In the drawing, the hatched portion shows a range satisfying the aforementioned expression.

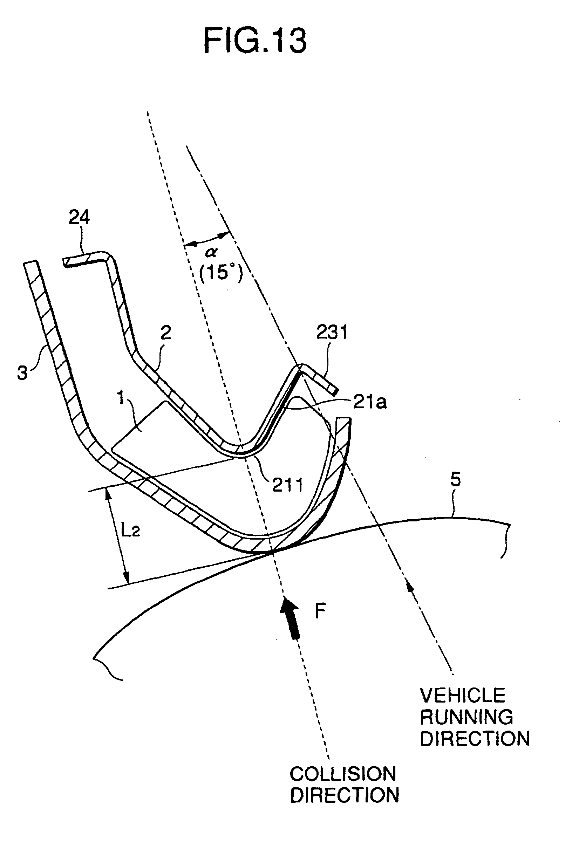

Incidentally, the pillar 2 related to the distance L1 between the pillar 2 and the contact point 4 at which the head dummy 5 touches the pillar garnish 3 generally means a flange terminal 231 of the pillar 2 but, in the case of a pillar shape shown in Fig. 13, the pillar 2 means an inner member convex portion 211. This is because the head dummy 5 strikes against the inner member convex portion 211 before the flange terminal 231 when the FMH 5 advances in the impact direction. In this case, the distance L2 needs to be not smaller than 15 mm.

In the aforementioned energy absorbing structure, when the FMH 5 (Free Motion Headform) is subjected to collision on the basis of the testing method of FMVSS201, the impact force F of the FMH 5 acts on the impact direction and is transmitted as force F', Fig. 10, to the pillar garnish 3 at the impact point 4 in the direction of the normal line with respect to the contact surface of the pillar garnish 3. The force F' which acts on the pillar garnish 3 is further transmitted to the energy absorbing matter 1 to form force F" acting on the receiving surface 21a, Fig. 13, of the inner member. The force F" is decomposed into components fx and fy, Fig. 10, on the surface of the inner member. The component fx becomes force for pressing the energy absorbing matter 1 against the inner member 21. In the conventional case where the angle of the receiving surface 21a of the inner member 21 was larger than 105° clockwise from the base line using the backward direction of the vehicle as 0° on the basis of the direction of the vehicle movement, for example, in Fig. 1, the component fx acted to disconnect the energy absorbing matter 1 from the inner member 2 so that the energy absorbing matter 1 slid and escaped to the vehicle inside. This disadvantage is eliminated. The inner member 21 catches the energy absorbing matter 1 securely (Fig. 10) in the region of the reference character T in Fig. 10.

Accordingly, the component fy acts so effectively that the energy absorbing matter 1 collapses and buckles to make it possible to absorb the impact energy.

In the energy absorbing structure configured as described above, in the case of the direction of impact in which the FMH 5 becomes closest to the inner member 21 (flange terminal), that is, in the case of the impact angle $\alpha$ of 15°, the receiving surface 21a becomes perpendicular to the impact direction. Accordingly, the energy absorbing matter 1 is prevented from sliding. This is because the component fx generated in Fig. 1 is eliminated.

When the angle of the receiving surface 21a is not larger than 105°, the component fx generated in the energy absorbing matter 1 is directed to the vehicle outside so that the component fx acts to press the energy absorbing matter 1 against the inner member 21. Accordingly, the energy absorbing stroke can be utilized sufficiently.

Furthermore, because the distance which can be used as the energy absorbing stroke is kept not smaller than 15 mm, the injury value is reduced. Accordingly, the tissue injury of the crew head can be avoided at the time of vehicle collision.

Thus, not only the visibility and getting-on-and-off characteristic of the crew and the designing characteristic can be secured while the size of the pillar garnish is kept in a conventional value without the necessity of widening the pillar portion as in the technique disclosed in Japanese Patent Unexamined Publication No. Hei-9-24785, but also the head of the crew can be protected securely at the time of vehicle collision.

Incidentally, the present invention is not limited to that which is shown in the aforementioned embodiment but various changes may be made in accordance with the purpose and use within the scope of the present invention. The shapes, sizes, materials, etc. of the inner member 21, pillar garnish 3 and energy absorbing matter 1 can be selected suitably in accordance with the purpose of use. The application of the pillar garnish 3 to the pillars is not limited to the front pillar, but it may be applied to a center pillar 7, a rear pillar 8, etc. The "angle range of 105° clockwise from the base line using the backward direction of the vehicle as 0°" corresponds to a range of from 0° to 105° or a range of from 75° to 180° in the case of a center pillar 7 and corresponds to a range of from 75° to 180° in the case of a rear pillar 8. That is, the angle range is replaced by these numerical value ranges.

As was described above, the energy absorbing structure according to the present invention is very useful for improvement of safety because upon use of the impact direction which is defined by FMVSS201 so that the distance from the body inner to the dummy head touching the pillar garnish becomes shortest, the energy absorbing stroke can be utilized effectively.

Also, the energy absorbing structure according to the present invention is very useful because impact energy at the time of vehicle collision can be absorbed effectively to attain protection of a crew while the getting-on-and-off of the crew and the good visibility and appearance of the vehicle are secured.

**Claims**

1. An energy absorbing structure of a vehicle comprising:

   an energy absorbing matter (1) disposed between a body inner (2) and a pillar garnish (3);
   the energy absorbing matter having a concave portion (11a) corresponding to a peak (23a) of a vehicle inner convex portion of said body inner (2);

   and wherein the pillar garnish (3) has an inflection point (31);
   **characterized in that**:

   an impact point (4) defined by FMVSS201 is located further inside the vehicle than said inflection point (31) related to said pillar garnish (3) and with respect to an impact direction (F) defined in FMVSS201;
   said peak (23a) of said vehicle inner convex portion of said body inner (2) is located in said vehicle further towards the vehicle outside than is the center position of gravity (5a) of a dummy head (5) advancing in said impact direction (F);
   that an energy absorbing stroke distance (L1) is the shortest distance between the pillar body (2) and the pillar garnish (3) as defined by a distance between a first line that is tangential to the pillar garnish (3) at its said inflection point (31) and a second line that is parallel to said first line and touching that part of said body inner (2)

   that is closest to said first fixed line when measured along a direction that is parallel to said impact direction (F);
   and that the aforesaid features and parameters serve, when the dummy head (5) impacts against the pillar garnish (3), to cause the energy absorbing matter (1) to exert a force (f) on the body inner (2), said force (f) having a component (fx) directed to the vehicle outside that prevents the energy absorbing matter (1) from moving away from the body inner (2).

2. An energy absorbing structure as in claim 1 wherein said energy absorbing stroke distance (L1) is about 15mm.

3. An energy absorbing structure of a vehicle comprising:

   an energy absorbing matter (1) disposed between a pillar garnish (3) and an inner member (21) provided in the vehicle interior side of a pillar (99); and wherein the pillar garnish (3) is spaced from said inner member (21) by a distance (L1) not smaller than 15mm;

   **characterized in that**:

   one receiving surface (21a) of said inner member (21) is kept within an angle range θ of 105° clockwise from a base line using the rearwardly extending longitudinal direction of the vehicle as being 0°;
   that said distance (L1) that is not smaller than 15mm is one determined by drawing a first line through a contact point (4) at which a dummy head (5) touches the pillar garnish (3) on impact, said first line being at an angle α of 15° clockwise with respect to the aforesaid base line; drawing a second line passing through said impact point (4) and normal to said first line; drawing a third line parallel to said second line and touching that point of said inner member (21) that is closest to said second line; and in which it is the distance between said parallel lines that is not less than 15mm;
   and **in that** said aforesaid features and parameters serve, when the dummy head (5) impacts against the pillar garnish (3), to cause the energy absorbing matter (1) to exert a force (f) on the body inner (2), said force (f) having a component (fx) directed to the vehicle outside that prevents the energy absorbing matter (1) from moving away from the body inner(2).

4. An energy absorbing structure of a vehicle comprising:

an energy absorbing matter (1) disposed between a pillar garnish (3) and an inner member (21) provided in the vehicle interior side of a pillar (99); and wherein the pillar garnish (3) is spaced from said inner member (21) by a distance (L1) not smaller than 15mm;

**characterized in that**:

one receiving surface of said inner member (21) is kept within an angle range θ of 75° to 180° in the case of a centre pillar (7) and in the case of a rear pillar (8) clockwise from a base line using the rearwardly extending direction of the vehicle as being 0°;

that said distance (L1) that is not smaller than 15mm is one determined by drawing a first line through a contact point (4) at which a dummy head (5) touches the pillar garnish (3) on impact, said first line being at an angle α of 15° clockwise with respect to the aforesaid base line; drawing a second line passing through said impact point (4) and normal to said first line; drawing a third line parallel to said second line and touching that point of said inner member (21) that is closest to said second line; and in which it is the distance between said parallel lines that is not less than 15mm;

and **in that** said aforesaid features and parameters serve, when the dummy head (5) impacts against the pillar garnish (3), to cause the energy absorbing matter (1) to exert a force (f) on the body inner (2), said force (f) having a component (fx) directed to the vehicle outside that prevents the energy absorbing matter (1) from moving away from the body inner(2).

## Patentansprüche

1. Energieabsorbierende Struktur eines Fahrzeugs, umfassend:

   ein zwischen einem Karosserieinneren (2) und einer Säulenverkleidung (3) angeordnetes energieabsorbierendes Material (1);

   wobei das energieabsorbierende Material einen konkaven Bereich (11a) aufweist, der mit einem Scheitel (23a) eines konvexen Fahrzeuginnen-Bereichs des Karosserieinneren (2) korrespondiert, und wobei die Säulenverkleidung (3) einen Krümmungspunkt (31) aufweist;
   **dadurch gekennzeichnet, dass**:

   ein durch den FMVSS201 definierter Aufprallpunkt (4) weiter innen im Fahrzeug lokalisiert ist als der Krümmungspunkt (31), der auf die Säulenverkleidung (3) bezogen ist und in Bezug auf eine in FMVSS201 definierte Aufprallrichtung (F);
   der Scheitel (23a) des konvexen Fahrzeuginnen-Bereichs des Karosserieinneren (2) in dem Fahrzeug weiter zur Fahrzeugaußenseite lokalisiert ist als die Schwerkraft-Mittelposition (5a) eines Dummykopfs (5), der sich in Aufprallrichtung (F) vorbewegt;
   dass eine energieabsorbierende Schlagdistanz (L1) die kürzeste Distanz zwischen dem Säulenkörper (2) und der Säulenverkleidung (3) ist, wie definiert durch eine Distanz zwischen einer ersten Linie, die tangential zur Säulenverkleidung (3) an ihrem Krümmungspunkt (31) verläuft, und einer zweiten Linie, die parallel zur ersten Linie verläuft und den Teil des Karosserieinneren (2) berührt, der am nächsten an der ersten fixierten Linie ist, wenn längs einer Richtung gemessen, die parallel zur Aufprallrichtung (F) ist;
   und dass die vorgenannten Merkmale und Parameter dazu dienen, wenn der Dummykopf (5) auf der Säulenverkleidung (3) aufprallt, das energieabsorbierende Material (1) dazu zu veranlassen, eine Kraft (f) auf das Karosserieinnere (2) auszuüben, wobei die Kraft (f) eine Komponente (fx) in Richtung zur Fahrzeugaußenseite aufweist, welche verhindert, dass sich das energieabsorbierende Material (1) vom Karosserieinneren (2) weg bewegt.

2. Energieabsorbierende Struktur nach Anspruch 1, wobei die energieabsorbierende Schlagdistanz (L1) etwa 15 mm beträgt.

3. Energieabsorbierende Struktur eines Fahrzeugs, umfassend:

   ein zwischen einer Säulenverkleidung (3) und einem an der Fahrzeuginnenseite einer Säule (39) vorgesehenen inneren Element (21) angeordnetes energieabsorbierendes Material; und wobei die Säulenverkleidung (3) von dem inneren Element (21) um eine Distanz (L1) beabstandet ist, die nicht kleiner ist als 15 mm;

**dadurch gekennzeichnet, dass**:

eine aufnehmende Oberfläche (21a) des inneren Elements (21) innerhalb eines Winkelbereichs θ von 105° im Uhrzeigersinn zu einer Basislinie gehalten wird, wobei die sich rückwärts erstreckende Längsrichtung des Fahrzeugs als 0° verwendet wird;

dass die Distanz (L1), die nicht kleiner ist als 15 mm, bestimmt wird durch Ziehen einer ersten Linie durch einen Kontaktpunkt (4), an dem ein Dummykopf (5) beim Aufprall die Säulenverkleidung (3) berührt, wobei die erste Linie unter einem Winkel α von 15° im Uhrzeigersinn in Bezug auf die vorgenannte Basislinie liegt; Ziehen einer durch den Aufprallpunkt (4) hindurchgehenden und orthogonal zur ersten Linie liegende zweite Linie; Ziehen einer dritten Linie parallel zur zweiten Linie und den Punkt des inneren Elements (21) berührend, der am nächsten an der zweiten Linie liegt und bei dem es die Distanz zwischen den parallelen Linien ist, die nicht weniger als 15 mm ist; und dass die vorgenannten Merkmale und Parameter dazu dienen, wenn der Dummykopf (5) auf die Säulenverkleidung (3) aufprallt, das energieabsorbierende Material (1) dazu zu veranlassen, eine Kraft (f) auf das Karosserieinnere (2) auszuüben, wobei die Kraft (f) eine Komponente (fx) aufweist, die zur Fahrzeugaußenseite gerichtet ist, was das energieabsorbierende Material (1) daran hindert, sich vom Karosserieinneren (2) weg zu bewegen.

4. Energieabsorbierende Struktur eines Fahrzeugs, umfassend:

ein zwischen einer Säulenverkleidung (3) und einem an der Fahrzeuginnenseite einer Säule (39) vorgesehenen inneren Element (21) angeordnetes energieabsorbierendes Material; und wobei die Säulenverkleidung (3) von dem inneren Element (21) um eine Distanz (L1) beabstandet ist, die nicht kleiner ist 15 mm;

**dadurch gekennzeichnet, dass**:

eine aufnehmende Oberfläche des inneren Elements (21) innerhalb eines Winkelbereichs θ von 75°bis 180°, im Falle einer Mittelsäule und im Falle einer Hecksäule, im Uhrzeigersinn zu einer Basislinie gehalten wird, wobei die sich rückwärts erstreckende Längsrichtung des Fahrzeugs als 0° verwendet wird;

dass die Distanz (L1), die nicht kleiner ist als 15 mm, bestimmt wird durch Ziehen einer ersten Linie durch einen Kontaktpunkt (4), an dem ein Dummykopf (5) beim Aufprall die Säulenverkleidung (3) berührt, wobei die erste Linie unter einem Winkel α von 15° im Uhrzeigersinn in Bezug auf die vorgenannte Basislinie liegt; Ziehen einer durch den Aufprallpunkt (4) hindurchgehenden und orthogonal zur ersten Linie liegende zweite Linie; Ziehen einer dritten Linie parallel zur zweiten Linie und den Punkt des inneren Elements (21) berührend, der am nächsten an der zweiten Linie liegt und bei dem es die Distanz zwischen den parallelen Linien ist, die nicht weniger als 15 mm ist; und dass die vorgenannten Merkmale und Parameter dazu dienen, wenn der Dummykopf (5) auf die Säulenverkleidung (3) aufprallt, das energieabsorbierende Material (1) dazu zu veranlassen, eine Kraft (f) auf das Karosserieinnere (2) auszuüben, wobei die Kraft (f) eine Komponente (fx) aufweist, die zur Fahrzeugaußenseite gerichtet ist, was das energieabsorbierende Material (1) daran hindert, sich vom Karosserieinneren (2) weg zu bewegen.

## Revendications

1. Une structure absorbante d'énergie d'un véhicule comprenant :

une matière absorbante d'énergie (1) disposée entre un intérieur de corps (2) et une garniture de colonne (3) ;

la matière absorbante d'énergie possédant une partie concave (11a) correspondant à un sommet (23a) d'une partie convexe interne du véhicule dudit intérieur de corps (2) ;

et dans lequel la garniture de colonne (3) possède un point d'inflexion (31) ;

**caractérisé en ce que** :

un point d'impact (4) défini par le FMVSS201 se situe plus loin à l'intérieur du véhicule que ledit pont d'inflexion (31) rattaché à ladite garniture de colonne (3) et par rapport à une direction d'impact (F) définie dans le FMVSS201 ;

ledit sommet (23a) de ladite partie convexe interne de véhicule dudit intérieur de corps (2) se situe dans ledit véhicule plus loin vers l'extérieur du véhicule que ne se trouve la position centrale de gravité (5a) d'une tête de mannequin (5) s'avançant dans ladite direction d'impact (F) ;

qu'une distance de course d'absorption d'énergie (L1) constitue la distance la plus courte entre le corps de colonne (2) et la garniture de colonne (3) telle que définie par une distance entre une première ligne laquelle est tangentielle par rapport à la garniture de colonne (3) au niveau de son dit point d'inflexion (31) et une seconde ligne laquelle est parallèle à ladite première ligne et se trouve en contact avec la partie dudit intérieur de corps (2) et laquelle est la plus proche de ladite première ligne fixe lorsque mesurée le long d'une direction parallèle à ladite direction d'impact (F) ;

et que les caractéristiques et les paramètres précités permettent, lorsque la tête de mannequin (5) entre en collision avec la garniture de colonne (3), à la matière absorbante d'énergie (1) d'exercer une force (f) sur l'intérieur de corps (2), ladite force (f) possédant un composant (fx) dirigé vers l'extérieur du véhicule lequel empêche l'éloignement de la matière absorbante d'énergie (1) par rapport à l'intérieur de corps (2).

2.  Structure absorbante d'énergie selon la revendication 1 dans laquelle ladite distance de course d'absorption d'énergie (L1) est d'environ 15 mm.

3.  Structure absorbante d'énergie d'un véhicule comprenant :

une matière absorbante d'énergie (1) disposée entre une garniture de colonne (3) et un élément interne (21) prévu sur le côté intérieur d'un véhicule d'une colonne (99) ; et dans lequel la garniture de colonne (3) est séparée dudit élément interne (21) par une distance (L1) laquelle n'est pas inférieure à 15 mm ;

**caractérisée en ce que** :

une surface de réception (21a) dudit élément interne (21) est maintenue dans une plage d'angle _ de 105° dans le sens des aiguilles d'une montre depuis une ligne de base utilisant la direction longitudinale s'étendant vers l'arrière du véhicule comme étant 0° ;

que ladite distance (L1) laquelle n'est pas inférieure à 15 mm est une distance déterminée en traçant une première ligne passant par un point de contact (4) au niveau duquel une tête de mannequin (5) entre en contact avec la garniture de colonne (3) lors de l'impact, ladite première ligne étant à un angle _ de 15° dans le sens des aiguilles d'une montre en ce qui concerne la ligne de base précitée ; en traçant une seconde ligne passant par ledit point d'impact (4) et étant normale par rapport à la première ligne ; en traçant une troisième ligne parallèle à ladite seconde ligne et entrant en contact avec le point dudit élément interne (21) qui est le plus proche de ladite seconde ligne ; et dans lequel la distance entre lesdites lignes parallèles n'est pas inférieure à 15 mm ;

et **en ce que** lesdites caractéristiques et paramètres précités permettent, lorsque la tête de mannequin (5) entre en collision avec la garniture de colonne (3), à la matière absorbante d'énergie (1) d'exercer une force (f) sur l'intérieur de corps (2), ladite force (f) possédant un composant (fx) dirigé vers l'extérieur du véhicule qui empêche la matière absorbante d'énergie (1) de s'éloigner de l'intérieur de corps (2).

4.  Une structure absorbante d'énergie d'un véhicule comprenant :

une matière absorbante d'énergie (1) disposée entre la garniture de colonne (3) et un élément interne (21) prévu sur le côté intérieur de véhicule d'une colonne (99) ; et dans lequel la garniture de colonne (3) est séparée dudit élément interne (21) par une distance (L1) qui n'est pas inférieure à 15 mm ;

**caractérisé en ce que** :

une surface de réception dudit élément interne (21) est maintenue dans une plage d'angle _ de 75° à 180° dans le cas d'une colonne centrale (7) et dans le cas d'une colonne arrière (8) dans le sens des aiguilles d'une montre depuis une ligne de base utilisant la direction s'étendant vers l'arrière du véhicule comme étant 0° ;

**en ce que** ladite distance (L1) laquelle n'est pas inférieure à 15 mm est une distance déterminée en traçant une première ligne passant par un point de contact (4) au niveau duquel une tête de mannequin (5) entre en contact avec la garniture de colonne (3) lors d'un impact, ladite première ligne étant à un angle _ de 15° dans le sens des aiguilles d'une montre en ce qui concerne la ligne de base précitée ; en traçant une seconde ligne passant par ledit point d'impact (4) et étant normale par rapport à ladite première ligne ; en traçant une troisième ligne parallèle à ladite seconde ligne et en entrant en contact avec ce point dudit élément interne (21) qui se trouve le plus proche de ladite seconde ligne ; et dans lequel la distance entre lesdites lignes parallèles n'est pas inférieure à 15 mm ;

et **en ce que** lesdits paramètres et caractéristiques précités permettent, lorsque la tête de mannequin (5) entre en collision avec la garniture de colonne (3), à la matière absorbante d'énergie (1) d'exercer une force (f) sur l'intérieur de corps (2), ladite force (f) possédant un composant (fx) dirigé vers l'extérieur du véhicule qui empêche la matière absorbante d'énergie (1) de s'éloigner de l'intérieur de corps (2).

# PRIOR ART
## FIG.1

# FIG.2

IMPACT ANGLE

| IMPACT POSITION | ANGLE IN HORIZONTAL PLANE, ON THE ASSUMPTION THAT THE IMPACT TOWARD THE BACK OF THE VEHICLE IS 0°, AND THE COUNTER CLOCKWISE DIRECTION IS +. | ANGLE IN VERTICAL PLANE, ON THE ASSUMPTION THAT THE HORIZONTAL DIRECTION IS 0°, AND THE UPWARD DIRECTION IS +. |
|---|---|---|
| FRONT HEADER<br><br>REAR HEADER | 105~255°<br>Fr    285~75° | 50°    UPR |
| SIDE RAIL | 15~165°<br>195~345° | 50° |
| PILLAR A | 105~165°<br>195~255° | 50° |
| PILLAR B | 15~165°<br>195~345° | 50° |
| PILLAR C | 15~165°<br>195~345° | 50° |
| ROOF | Any | Any |

# FIG.3

VEHICLE
INSIDE

VEHICLE
OUTSIDE

IMPACT
DIRECTION

# FIG.4

# FIG.5

FIG.6

FIG.7

GENERATED LOAD ( UNIT ; THOUSAND ) ( N )

DEFORMATION QUANTITY ( mm )

# FIG.8

# FIG.9

VEHICLE
OUTSIDE

VEHICLE
INSIDE

$\alpha$
(15°)

$\theta$

$L_1$

99

97

22(2)

98

231(23)

24

3

21(2)

21a

1

4

F

5

VEHICLE
RUNNING
DIRECTION

COLLISION
DIRECTION

# FIG.10

# FIG.11

# FIG.12

# FIG.13

$\alpha$
(15°)

24

2

3

1

231

21a

211

5

L2

F

VEHICLE
RUNNING
DIRECTION

COLLISION
DIRECTION

# FIG.14

EP 0 878 357 B1